# FASCICULE DE BREVET EUROPEEN

(11) **EP 2 062 819 B1**
(45) Date de publication et mention de la délivrance du brevet: **23.02.2011**
(21) Numéro de dépôt: 08169672.6
(22) Date de dépôt: 21.11.2008
(51) Int. Cl.: B64D 27/26

(54) **Turboréacteur suspendu à un pylône d'aéronef**
Turbostrahltriebwerk, das an einem Mast eines Flugzeuges aufgehängt ist
Jet engine hanging from an aircraft pylon

(30) Priorité: 23.11.2007 FR 0708231
(43) Date de publication de la demande: 27.05.2009
(73) Titulaire: SNECMA, 75015 Paris (FR); Aircelle, 76700 Gonfreville l'Orcher (FR)
(72) Inventeur: Baillard, André Bruno Denis, 76110 Bretteville du Grand Caux (FR); Chouard, Pierre-Alain Jean-Marie Philippe Hugue, 75018 Paris (FR); Conte, François Raymond, 31170 Tournefeuille (FR); Lefort, Guillaume, 75012 Paris (FR)
(74) Mandataire: Bloch & Bonnétat

(56) Documents cités:
- EP-A- 0 527 672
- EP-A- 1 090 838
- EP-A- 1 486 418
- EP-A- 1 493 663
- GB-A- 2 010 969
- US-A- 4 079 981
- US-A- 4 634 081

## Description

La présente invention concerne le domaine des moteurs à turbine à gaz, en particulier des turboréacteurs à soufflante avant, et de leur accrochage à un aéronef.

Un turboréacteur à soufflante avant comprend un rotor de soufflante de grand diamètre logé dans un carter sur lequel est montée la manche d'entrée d'air. Un carter intermédiaire est disposé immédiatement en arrière du carter de soufflante. En aval le moyeu du carter se prolonge par le carter du flux primaire et constitué des divers carters de compresseurs, de chambre de combustion, de turbines et d'échappement. L'air entrant par la manche d'entrée d'air est comprimé à travers le rotor de soufflante puis divisé en deux flux cylindriques concentriques : un flux primaire et un flux secondaire. Ce dernier contourne le moteur et est éjecté froid soit en flux séparé soit, après mélange avec le flux primaire, en aval des étages de turbine. Le flux primaire subit une compression supplémentaire avant d'être mélangé à un carburant pour produire des gaz chauds dans une chambre de combustion. Les gaz chauds alimentent les étages successifs de turbine qui entraînent en rotation autour de l'axe du moteur la soufflante et les étages de compression de l'air. Le flux primaire est ensuite éjecté pour fournir une partie de la poussée. Celle-ci est produite en majeure partie par le flux secondaire. Le rapport des débits entre les flux secondaire et primaire, est désigné taux de dilution ; avec l'augmentation de la puissance des moteurs on est conduit à concevoir des moteurs à fort taux de dilution pour lesquels le rapport des diamètres entre le carter de soufflante et le carter du flux primaire est important.

Les moteurs, selon un mode d'accrochage conventionnel, sont fixés à l'aéronef, sur ou sous l'aile ou au fuselage, par l'intermédiaire d'un pylône. Le pylône a une forme de caisson allongé et rigide capable de transmettre les efforts selon les trois directions axiales, latérales et verticales entre le moteur et la structure de l'aéronef, l'axe étant celui du moteur. L'accrochage du moteur au pylône est localisé en deux plans verticaux, un premier plan à l'avant passant par le carter intermédiaire et à l'arrière passant par le carter d'échappement. Ces deux carters sont des éléments structuraux du moteur supportant notamment les paliers, respectivement avant et arrière. En ce qui concerte le plan avant, on distingue deux modes d'accrochage distincts actuellement mis en oeuvre sur les aéronefs civils, un premier sur la virole externe du carter intermédiaire, et un second au niveau du moyeu.

La présente invention pour ce qui concerne le mode d'accrochage avant, vise une attache par la virole externe du carter intermédiaire.

Dans le cas de suspensions isostatiques, les efforts sont transmis par des biellettes ou pièces équivalentes reliant le moteur au pylône en étant attachées par des liaisons de type à rotule de manière à travailler en traction et en compression uniquement. L'agencement est prévu pour assurer la transmission des efforts selon les trois directions axiale Fx, verticale Fz et latérale Fy, ainsi que les moments selon ces trois directions Mx, My et Mz respectivement. Outre les attaches entre les carters, intermédiaire et d'échappement, la suspension comprend également des bielles de transmission ou de reprise de poussée reliant le moyeu du carter intermédiaire à l'attache arrière, éventuellement au pylône à proximité de l'attache arrière. Le plan de suspension avant, généralement situé sur le carter intermédiaire reprend des efforts latéraux et verticaux, le plan de suspension arrière reprend des efforts latéraux et verticaux ainsi que le moment autour de l'axe moteur. Les moments latéraux et verticaux sont repris par les réactions en sens opposés des deux plans de suspension.

Les problèmes associés à l'accrochage des moteurs sont les distorsions des carters, d'une part celles résultant des transmissions ponctuelles des efforts, les points d'attaches de type bielle et chape formant des zones de faible étendue, d'autre part celles résultant du déport de la reprise de poussée sur le pylône par rapport au vecteur poussée le long de l'axe du moteur. Le couple formé par les deux forces induit une flexion du moteur le long de son axe qui altère les jeux entre les parties fixes et tournantes avec détérioration des performances et une incidence sur la consommation spécifique. Il s'ensuit également une usure des pièces par frottement et une réduction de la durée de vie du moteur. Le phénomène est encore plus marqué avec des amplitudes de déformations plus grandes sur les moteurs à fort taux de dilution et au rapport des diamètres plus important entre le carter de soufflante et le carter de flux primaire.

La présente invention a donc pour objet une suspension de turboréacteur à soufflante avant à un pylône qui transmet des efforts à celui-ci sans déformer localement ou globalement des carters cylindriques contenant des pièces en rotation. Elle a également pour objet une suspension de masse optimale. Enfin la suspension ne doit pas nuire à l'accessibilité et à la maintenance.

On parvient à réaliser ces objectifs, conformément à l'invention, avec un turboréacteur suspendu à un pylône d'aéronef, le turboréacteur comprenant une soufflante avant, un carter intermédiaire en aval de la soufflante avec une virole externe et un moyeu reliés entre eux par des bras radiaux et un carter d'échappement avec une virole externe, les deux carters étant alignés sur un même axe XX, le pylône comprenant un caisson structural de forme allongée. Le turboréacteur est caractérisé par le fait que ledit caisson est fixé en amont rigidement à la virole externe du carter intermédiaire par une attache comprenant un moyen de transmission des efforts axiaux et latéraux et en aval par une attache audit carter d'échappement,

L'invention repose sur la caractéristique selon laquelle le chemin principal des efforts en fonctionnement normal du moteur vers le pylône passe par l'avant du moteur et diminue ainsi les efforts transitant entre l'avant et l'arrière du moteur. Les efforts en jeu sont notamment la poussée, la gravité et les efforts aérodynamiques de manche d'entrée d'air.

On connaît par ailleurs la demande de brevet WO2007/033994 portant sur une suspension visant comme dans la présente demande à diminuer ou supprimer les effets de la distorsion de carcasse et en particulier la flexion longitudinale due à la poussée du moteur. Cependant selon la solution présentée dans ce document l'accroche arrière du moteur est exclue explicitement ce qui implique des distorsions sous gravité fortement accentuées et ne semble pas résoudre de manière satisfaisante le problème des distorsions sur le carter. Par ailleurs, par rapport à cette solution l'invention permet de reprendre le couple Mz, autour de la direction verticale, entre les plans avant et arrière ce qui permet de réduire l'importance de l'attache avant à une reprise ponctuelle d'efforts éventuellement.

On connait également la demande de brevet britannique GB2010969 qui décrit un mode de suspension d'un turboréacteur à un pylône d'aéronef, dans lequel la poussée est transmise au pylône par des bielles reliant le carter à une attache arrière, une bielle reliant l'attache arrière à l'attache avant.

On connait enfin le brevet américain US4079981 qui décrit un pion de cisaillement transmettant la poussée du moteur à l'une des attaches du pylône.

Le turboréacteur comprend en outre les caractéristiques suivantes prises isolément ou en combinaison :

Ledit moyen de transmission des efforts axiaux est un pion de cisaillement.

L'attache avant comprend une plaque amont solidaire du caisson. Cette plaque peut être boulonnée ou non sur la virole externe du carter intermédiaire.

L'attache avant comprend au moins une biellette de chaque côté du caisson reliée latéralement à la virole externe du carter intermédiaire et, agencée de façon à ne transmettre que des efforts de traction ou de compression.

Plus particulièrement l'attache avant comprend une paire de biellettes de chaque côté du caisson reliées à la virole externe du carter intermédiaire, chacune des biellettes étant agencée de façon à ne transmettre que des efforts de traction ou de compression.

Le turboréacteur comprend deux bielles de transmission de poussée reliées en amont au moyeu du carter intermédiaire et en aval à l'attache arrière ou bien au pylône directement.

L'attache arrière au carter d'échappement est du type souple et plus particulièrement l'attache souple comprend deux plots transmettant les efforts verticaux ainsi qu'un plot transmettant les efforts latéraux.

Alternativement l'attache arrière au carter d'échappement est du type rigide et plus particulièrement l'attache arrière au carter d'échappement comprend une poutre transversale reliée à la virole externe du carter d'échappement par au moins deux biellettes fixées par des liaisons à rotule.

Conformément à un mode de réalisation particulier, le caisson comprend en amont un ensemble de trois bras rigides fixés en trois points sur la virole externe du carter intermédiaire. Les bras rigides peuvent être fixés sur la virole externe du carter intermédiaire par des liaisons à rotule.

On décrit maintenant l'invention plus en détail, les modes de réalisation présentés n'étant pas limitatifs ; ils sont décrits en référence aux dessins annexés sur lesquels :
La figure 1 représente schématiquement et en perspective un turboréacteur suspendu à un pylône selon l'invention ;
La figure 2 représente le moteur avec la répartition des efforts selon les axes principaux ;
La figure 3 représente, vu en perspective isométrique avant, un détail de l'attache amont du caisson sur la virole externe du carter intermédiaire ;
La figure 4 montre une coupe axiale du plan de liaison entre le caisson et la virole ;
La figure 5 montre le schéma d'une attache souple entre le caisson du pylône et le carter d'échappement ;
La figure 6 montre le schéma d'une attache rigide entre le caisson du pylône et le carter d'échappement ;
La figure 7 montre une variante de réalisation de l'attache à la virole du carter intermédiaire ;

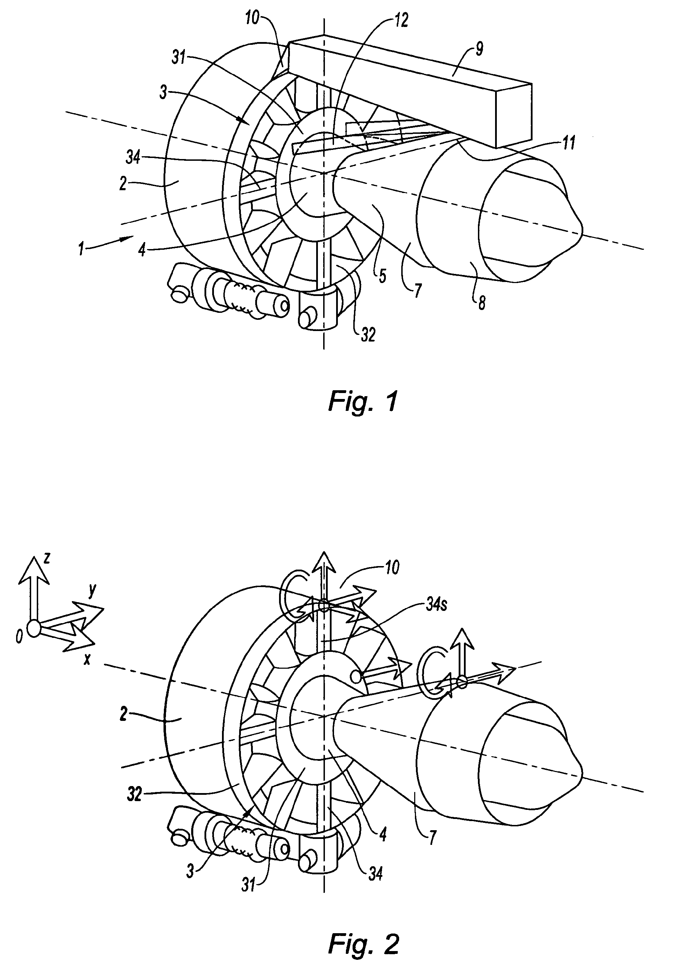

Comme on le voit sur les figures 1 et 2 le turboréacteur 1 est du type à turbosoufflante avant dont on a représenté le carter 2, en aval duquel se trouve le carter intermédiaire 3. L'amont, correspondant à l'admission d'air, est sur la gauche par rapport à la figure.

En aval, on voit le carter 4 de la section de compression. Cette section communique avec la chambre de combustion 5 de type annulaire. Les étages de turbines 7 sont situés en aval de la chambre de combustion. Le moteur se termine par le carter d'échappement 8, pièce structurale connue en soi, qui comme le carter intermédiaire comprend un moyeu, supportant des paliers, une virole externe et des bras radiaux de transmission des efforts entre le moyeu et la virole externe.

Le repère, par rapport auquel on oriente les axes et les composantes des efforts et des moments, comprend l'axe Ox parallèle à l'axe XX du moteur celui étant supposé horizontal et orienté de l'amont vers l'aval ; l'axe Oz est l'axe vertical et l'axe Oy est l'axe transversal.

Le moteur est fixé à la structure de l'aéronef, aile ou fuselage, par l'intermédiaire, comme cela est connu, d'un pylône 9. La forme générale de ce dernier est celle d'un caisson parallélépipédique rigide. Il assure la transmission de tout effort entre le moteur et la structure.

La suspension qui est l'ensemble des pièces ou organes assurant la fixation du moteur et la transmission des efforts entre le moteur et le pylône, comprend une attache avant 10 entre la virole externe du carter intermédiaire 3 et le pylône 9, une attache arrière 11 entre la virole externe du carter d'échappement 8 et le pylône, ainsi que deux bielles 12 de reprise ou transmission de poussée.

Conformément à l'invention l'attache 10 amont est agencée pour reprendre les forces Fx selon la direction Ox, Fy selon la direction Oy, Fz selon la direction Oz ainsi qu'au moins une partie du moment Mx autour de la direction Ox.

L'attache arrière 11 est agencée pour reprendre les forces Fy selon la direction Oy et les forces Fz selon la direction Oz, ainsi qu'une partie du moment axial Mx.

Les bielles 12 de reprise de poussée sont agencées pour reprendre une partie des forces Fx selon la direction Ox. Elles sont fixées en amont sur le moyeu 31 du carter intermédiaire, de part et d'autre du plan vertical, (Ox, Oz) passant par l'axe XX du moteur ; en aval elles sont fixées directement sur le caisson 9 du pylône. Elles peuvent aussi être fixées sur la poutre de l'attache arrière qui relie le carter d'échappement au pylône, le cas échéant par l'intermédiaire d'un palonnier.

Ainsi la suspension présente un chemin d'effort principal autour du carter intermédiaire avec un passage par la virole externe 32 du carter intermédiaire.

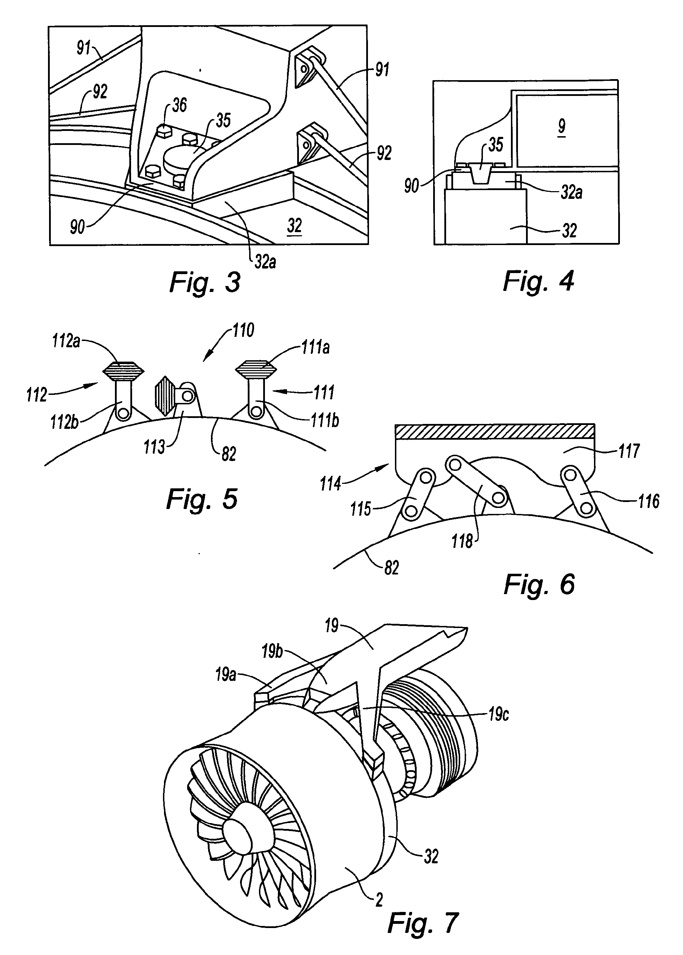

Sur les figures 3 et 4 est représenté un exemple d'attache amont 10 dont la fonction principale est de reprendre les efforts axiaux. L'extrémité amont du caisson 9 comprend une plaque 90 dans le plan (Ox ; Oy) qui repose sur un socle 32a solidaire de la virole externe 32 du carter intermédiaire 3. La plaque et le socle sont traversés, selon l'axe Oz, par un pion de cisaillement 35. Le pion de cisaillement a pour fonction de constituer un moyen de transmission des efforts axiaux entre la virole 32 et le caisson 9. Ici des boulons 36 maintiennent la plaque en appui contre le socle 32a et assurent une partie de la reprise des efforts verticaux. Dans la mesure où les efforts de poussée sont transmis par la virole 32, cette dernière est renforcée en conséquence, par exemple par une poutre en arc de cercle boulonnée. Les efforts axiaux issus de la poussée sur l'axe du moteur sont remontés au pylône 9 par un bras rigide radial 34 du carter intermédiaire.

On rappelle que le carter intermédiaire 3 est une pièce structurale du moteur avec un moyeu 31 à l'intérieur duquel les paliers avant supportant les arbres coaxiaux des rotors, sont montés. Par exemple, dans un moteur à double corps avec une soufflante avant et deux arbres coaxiaux pour les rotors à basse pression et à haute pression, le moyeu contient les trois paliers avant du moteur. La virole externe 32 est reliée au moyeu par des bras radiaux dont une partie est structurale et agencée pour transmettre les efforts entre les deux pièces, moyeu et virole externe. Le bras radial 34s supérieur à 12h est conçu de façon à assurer de manière permanente la transmission de la poussée entre le moyeu et la virole externe à l'endroit de la fixation du caisson 9.

D'autres solutions que le pion de cisaillement sont également possibles.

La reprise des efforts latéraux est assurée par un système de biellettes bi-rotulées. Conformément à un mode de réalisation, on dispose deux biellettes 91 et 92 en V dont la pointe est attachée par une ferrure à la virole externe 32 du carter intermédiaire. Les attaches sont réalisées par des liaisons à rotule comme cela est connu en soi de manière à ne transmettre que des efforts dans l'axe de la bielle. Le V formé par les biellettes est contenu dans un plan vertical perpendiculaire à l'axe du moteur. Ainsi chaque paire de biellettes en V ne reprend aucun effort suivant la direction de l'axe moteur.

Pour ce qui concerne l'attache arrière 11 deux variantes sont possibles.

Selon un premier mode de réalisation représenté sur la figure 5, l'attache arrière est du type souple 110 avec deux plots 112 et 111 pour reprendre des efforts verticaux. Les deux plots sont disposés dans un plan transversal par rapport à l'axe de part et d'autre du plan vertical qui passe par cet axe. Les plots comprennent une partie en élastomère 112a, 111a reliée au caisson non représenté sur la figure et une bielle 112b, 111 b reliée par une attache de type à rotule à la virole externe 82 du carter d'échappement 8. Les plots dont la raideur est maîtrisée sont en matériau élastomère ou tout autre matériau composite souple.

Pour la reprise d'une partie du moment Mx autour de l'axe XX, un troisième plot 113 est disposé entre les deux premiers avec une liaison tangentielle.

Selon un autre mode de réalisation représenté sur la figure 6, l'attache 114 est rigide avec deux biellettes latérales 115 et 116 fixées par des liaisons à rotule entre la virole 82 externe du carter d'échappement 8 et une poutre 117 transversale par rapport à l'axe XX qui vient se fixer rigidement sur le caisson 9. Pour la reprise d'une partie du moment Mx, une troisième biellette 118 est fixée tangentiellement entre la virole 82 et la poutre 117.

Selon une variante représentée sur la figure 7, le caisson 19 comprend trois branches structurales à l'amont, 19a, 19b et 19c. L'extrémité de chaque branche est reliée à la virole externe du carter intermédiaire par une liaison du type de celle présentée sur la figure 3.

## Revendications

1. Turboréacteur équipé d'un pylône de suspension à un aéronef, le turboréacteur (1) comprenant une soufflante avant, un carter intermédiaire (3) en aval de la soufflante avec une virole externe (32) et un moyeu (31) reliés entre eux par des bras radiaux (34) et un carter d'échappement (8) avec une virole externe, les deux carters (3, 8) étant alignés sur un même axe XX, le pylône comprenant (9) un caisson structural de forme allongée, **caractérisé par le fait que** le dit caisson (9) est fixé en amont rigidement à la virole externe (32) du carter intermédiaire (3) par une attache avant (10) comprenant un moyen de transmission des efforts axiaux et latéraux et en aval par une attache arrière audit carter d'échappement (8),

2. Turboréacteur selon la revendication une, dont ledit moyen de transmission des efforts est un pion (35) de cisaillement.

3. Turboréacteur selon les revendications 1 ou 2 dont l'attache avant (10) comprend une plaque (90) solidaire du caisson (9) en amont

4. Turboréacteur selon la revendication 3 dont ladite plaque solidaire du caisson est boulonnée sur la virole externe (32) du carter intermédiaire.

5. Turboréacteur selon l'une des revendications précédentes dont l'attache avant (10) comprend au moins une biellette (91, 92) de chaque côté du caisson (9) reliée latéralement à la virole externe (32) du carter intermédiaire et, agencée de façon à ne transmettre que des efforts de traction ou de compression.

6. Turboréacteur selon la revendication précédente dont l'attache avant (10) comprend une paire de biellettes de chaque côté du caisson (9) reliées latéralement à la virole externe (32) du carter intermédiaire et agencées de façon à ne transmettre que des efforts de traction ou de compression.

7. Turboréacteur selon la revendication 1 dont le caisson (19) comprend en amont un ensemble de trois bras (19a, 19b, 19c) rigides fixés en trois points sur la virole externe du carter intermédiaire.

8. Turboréacteur suspendu à un pylône d'aéronef selon la revendication précédente dont les bras rigides (19a, 19b, 19c) sont fixés sur la virole externe du carter intermédiaire (3) par des liaisons à rotule.

9. Turboréacteur selon l'une des revendications précédentes comprenant deux bielles (12) de transmission de poussée reliées en amont au moyeu (31) du carter intermédiaire et en aval à l'attache arrière

10. Turboréacteur selon l'une des revendications 1 à 8 comprenant deux bielles (12) de transmission de poussée reliées en amont au moyeu (31) du carter intermédiaire et en aval au pylône (9, 19).

11. Turboréacteur selon l'une des revendications précédentes dont l'attache arrière (110) au carter d'échappement est du type souple.

12. Turboréacteur selon la revendication précédente dont l'attache souple comprend deux plots (111, 112) transmettant les efforts verticaux.

13. Turboréacteur selon la revendication précédente dont l'attache souple comprend un plot (113) transmettant les efforts latéraux.

14. Turboréacteur selon l'une des revendications 1 à 10 dont l'attache arrière (114) au carter d'échappement est du type rigide.

15. Turboréacteur selon la revendication précédente dont l'attache arrière au carter d'échappement comprend une poutre transversale reliée à la virole externe du carter d'échappement (8) par au moins deux biellettes fixées par des liaisons à rotule.

## Claims

1. A turbojet with a mast for a suspension to an aircraft mast, the turbojet (1) comprising a front fan, an intermediate casing (3) downstream of the fan with an outer shroud (32) and a hub (31) connected together by radial arms (34) and an exhaust casing (8) with an outer shroud, the two casings (3, 8) being aligned on one and the same axis XX, the mast comprising a structural strut (9) assembly of elongated shape, wherein said strut (9) assembly is attached upstream rigidly to the outer shroud (32) of the intermediate casing (3) by a front attachment (10) comprising a means for transmitting the axial and lateral forces and downstream by a rear attachment to said exhaust casing (8).

2. The turbojet as claimed in claim 1, wherein said means for transmitting the forces is a shear pin (35).

3. The turbojet as claimed in claims 1 or 2, wherein the front attachment (10) comprises a plate (90) secured to the upstream strut (9) assembly.

4. The turbojet as claimed in claim 3, wherein said plate secured to the strut assembly is bolted onto the outer shroud (32) of the intermediate casing.

5. The turbojet as claimed in one of the preceding claims, wherein the front attachment (10) comprises at least one link rod (91, 92) on each side of the strut (9) assembly connected laterally to the outer shroud (32) of the intermediate casing and arranged so as to transmit only traction or compression forces.

6. The turbojet as claimed in the preceding claim wherein the front attachment (10) comprises a pair of link rods on each side of the strut assembly (9) connected laterally to the outer shroud (32) of the intermediate casing and arranged so as to transmit only traction or compression forces.

7. The turbojet as claimed in claim 1, wherein the strut assembly (19) comprises upstream a set of three rigid arms (19a, 19b, 19c) attached at three points to the outer shroud of the intermediate casing.

8. The turbojet suspended from an aircraft mast as claimed in the preceding claim, wherein the rigid arms (19a, 19b, 19c) are attached to the outer shroud of the intermediate casing (3) via swivel links.

9. The turbojet as claimed in one of the preceding claims, comprising two link arms (12) for transmitting thrust connected upstream to the hub (31) of the intermediate casing and downstream to the rear attachment.

10. The turbojet as claimed in one of claims 1 to 8, comprising two link arms (12) for transmitting thrust connected upstream to the hub of the intermediate casing and downstream to the mast (9, 19).

11. The turbojet as claimed in one of the preceding claims, wherein the rear attachment (110) to the exhaust casing is of the flexible type.

12. The turbojet as claimed in the preceding claim, wherein the flexible attachment comprises two mounts (111, 112) transmitting the vertical forces.

13. The turbojet as claimed in the preceding claim, wherein the flexible attachment (113) comprises a mount transmitting the lateral forces.

14. The turbojet as claimed in one of claims 1 to 10, wherein the rear attachment (114) to the exhaust casing is of the rigid type.

15. The turbojet as claimed in the preceding claim, wherein the rear attachment to the exhaust casing comprises a transverse beam connected to the outer shroud of the exhaust casing (8) by at least two link rods attached via swivel links.

## Patentansprüche

1. Turbostrahltriebwerk, ausgestattet mit einem Mast zur Aufhängung an ein Flugzeug, wobei das Turbostrahltriebwerk (1) ein Front-Fan-Triebwerk, ein Zwischengehäuse (3) nach dem Front-Fan-Triebwerk mit einem externen Ring (32) und ein Nabenstück (31) umfasst, die untereinander mit radialen Armen (34) verbunden sind, und ein Auslassgehäuse (8) mit einem externen Ring, wobei die zwei Gehäuse (3, 8) auf einer gleichen Achse XX ausgerichtet sind, wobei der Mast (9) eine kastenförmige Struktur mit länglicher Form aufweist, **dadurch gekennzeichnet, dass** der Kasten (9) vorgelagert starr auf dem äußeren Ring (32) des Zwischengehäuses (3) durch eine vordere Befestigung (10) befestigt ist, umfassend ein Mittel zur Übertragung der axialen und seitlichen Kräfte, und nachgelagert durch eine hintere Befestigung an das Auslassgehäuse (8).

2. Turbostrahltriebwerk nach Anspruch eins, wobei das Mittel zur Übertragung der Kräfte ein Kreuzungszapfen (35) ist.

3. Turbostrahltriebwerk nach Anspruch 1 oder 2, wobei die vordere Befestigung (10) eine Platte (90) umfasst, die mit dem vorgelagerten (9) Kastgen einstückig ist.

4. Turbostrahltriebwerk nach Anspruch 3, wobei die Platte, die mit dem Kasten einstückig ist, auf dem externen Ring (32) des Zwischengehäuses verbolzt ist.

5. Turbostrahltriebwerk nach einem der vorhergehenden Ansprüche, wobei die vordere Befestigung (10) zumindest eine Stange (91, 92) auf jeder Seite des Kastens (9) aufweist, die seitlich mit dem externen Ring (32) des Zwischengehäuses verbunden und so angeordnet ist, dass sie nur Zug- oder Druckkräfte überträgt.

6. Turbostrahltriebwerk nach einem der vorhergehenden Ansprüche, wobei die vordere Befestigung (10) ein Paar Stangen auf jeder Seite des Kastens (9) aufweist, die seitlich mit dem externen Ring (32) des Zwischengehäuses verbunden und so angeordnet sind, dass sie nur Zug- oder Druckkräfte übertragen.

7. Turbostrahltriebwerk nach Anspruch 1, wobei der Kasten (19) vorgelagert eine Gruppe von drei starren Armen (19a, 19b, 19c) umfasst, die an drei Punkten auf dem externen Ring des Zwischengehäuses befestigt sind.

8. Turbostrahltriebwerk, aufgehängt an einem Mast eines Flugzeugs nach dem vorhergehenden Anspruch, wobei die starren Arme (19a, 19b, 19c) auf dem externen Ring des Zwischengehäuses (3) durch Kugelkopfverbindungen befestigt sind.

9. Turbostrahltriebwerk nach einem der vorhergehenden Ansprüche, umfassend zwei Pleuelstangen (12) zur Übertragung des Schubs, vorgelagert verbunden mit dem Nabenstück (31) des Zwischengehäuses und nachgelagert mit der hintern Befestigung.

10. Turbostrahltriebwerk nach einem der Ansprüche 1 bis 8, umfassend zwei Pleuelstangen (12) zu Übertragung des Schubs, vorgelagert verbunden mit dem Nabenstück (31) des Zwischengehäuses und nachgelagert mit dem Mast (9, 19).

11. Turbostrahltriebwerk nach einem der vorhergehenden Ansprüche, wobei die hintere Befestigung (110) an das Auslassgehäuse der flexiblen Art ist.

12. Turbostrahltriebwerk nach dem vorhergehenden Anspruch, wobei die flexible Befestigung zwei Kontaktstücke (111, 112) umfasst, die die vertikalen Kräfte übertragen.

13. Turbostrahltriebwerk nach dem vorhergehenden Anspruch, wobei die flexible Befestigung ein Kontaktstück (113) umfasst, das die seitlichen Kräfte überträgt.

14. Turbostrahltriebwerk nach einem der Ansprüche 1 bis 10, wobei die hintere Befestigung (114) an das Auslassgehäuse der starren Art ist.

15. Turbostrahltriebwerk nach dem vorhergehenden Anspruch, wobei die hintere Befestigung an das Auslassgehäuse einen Querbalken umfasst, der mit dem externen Ring des Auslassgehäuses (8) durch zumindest zwei Stangen verbunden ist, die durch Kugelkopfverbindungen befestigt sind.
